# EUROPÄISCHE PATENTSCHRIFT

(11) **EP 1 227 362 B1**
(45) Veröffentlichungstag und Bekanntmachung des Hinweises auf die Patenterteilung: **26.10.2005**
(21) Anmeldenummer: 01101474.3
(22) Anmeldetag: 24.01.2001
(51) Int. Cl.: G02F 1/15

(54) **Elektrochromes Verbundglas**
Laminated electrochromic glass
Vitrage électrochrome feuilleté

(43) Veröffentlichungstag der Anmeldung: 31.07.2002
(73) Patentinhaber: Gesimat GmbH, Gesellschaft für intelligente Materialen, und Technologien, 12555 Berlin (DE)
(72) Erfinder: Kraft, Alexander, 12557 Berlin (DE); Heckner, Karl-Heinz, 12557 Berlin (DE)

(56) Entgegenhaltungen:
- DE-A- 19 834 834
- US-A- 4 818 352
- US-A- 5 838 483
- US-A- 5 859 723

## Beschreibung

Die Erfindung betrifft ein neuartiges Verfahren zur Herstellung großformatiger elektrochromer Verbundgläser, deren Durchlässigkeit für elektromagnetische Strahlung, insbesondere im UV-, sichtbaren und nahen infraroten Bereich durch elektrische Ansteuerung geregelt wird. Diese großformatigen elektrochromen Verbundgläser finden ihr Hauptanwendungsgebiet in der Verglasung von Gebäuden und Fahrzeugen. Sie dienen hier der Regelung des Licht- und Wärmeflusses sowie dem Blendschutz. Auch der Einsatz für großflächige Displays ist möglich.

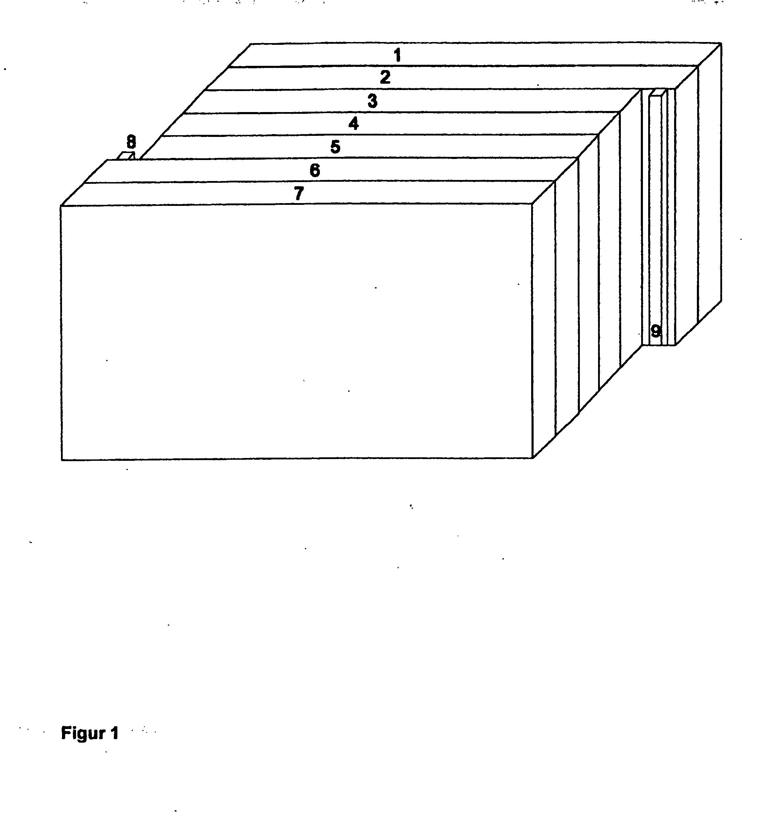

Elektrochrome Systeme sind Anordnungen, deren optische Eigenschaften, insbesondere die Lichtdurchlässigkeit und Reflektivität durch elektrische Ansteuerung verändert werden können. Dabei befinden sich zwischen 2 Elektroden, von denen mindestens eine transparent ist, elektrochrome Substanzen und ein Elektrolyt. Elektrochrome Substanzen sind Stoffe, welche bei der Aufnahme und Abgabe von elektrischen Ladungen ihre optischen Eigenschaften ändern. Diese elektrochromen Substanzen können sich als Film auf den Elektroden befinden und/oder im Elektrolyten gelöst vorliegen. Die Erfindung bezieht sich auf elektrochrome Anordnungen mit festen elektrochromen Schichten. Figur 1 zeigt den schematischen Aufbau einer solchen elektrochromen Anordnung mit festen elektrochromen Filmen.

### Legende von Figur 1:

- **1**, **7:**: transparente oder reflektierende Substrate
- **2**, **6**:: elektrisch leitfähige Schichten von denen mindestens eine transparent ist
- **3**:: elektrochrome Schicht
- **4**:: ionenleitendes Material (Elektrolyt)
- **5**:: zweite elektrochrome Schicht oder redoxfähige lonenspeicherschicht
- **8**, **9**:: metallischer Randkontakt

Trotz des großen Anwendungspotentials elektrochromer Systeme befinden sich diese aber aufgrund diverser Mängel des aktuellen Stands der Technik bis heutigen Zeitpunkt nur sehr beschränkt im praktischen Einsatz.

In den meisten Fällen werden elektrochrome Schichten durch Vakuumbeschichtungsverfahren aufgebracht, wie z.B. in DE19839299 beschrieben. Vakuumverfahren sind jedoch vergleichsweise kostenintensiv und schränken die Auswahlmöglichkeit für die elektrochromen Materialien stark ein, da sie ausschließlich die Herstellung elektrochromer Oxide ermöglichen. Damit ist auch die Auswahlmöglichkeit der Farben der elektrochromer Anordnungen eingeschränkt. Anorganische Komplexverbindungen und organische Polymere sind durch Vakuumtechniken nicht herstellbar, weisen aber elektrochrome Eigenschaften auf, mit denen verschiedene Farben für elektrochrome Anordnungen realisierbar sind.

Die Herstellung der elektrochromen Schichten durch Sol-Gel-Techniken ist ebenfalls möglich, wie beispielsweise in US6005705 oder US5838483 beschrieben.

In DE19834834 wird eine selbsthaftende elektrochrome Elektrode beschrieben. Das elektrochrome Material ist ein Polymer, vorzugsweise Poly-(3,4-ethylendioxy-thiophen). Die elektrochrome Schicht dieser selbsthaftenden elektrochromen Elektrode wird mittels Sol-Gel-Technik hergestellt. Dazu wird die wässrige Dispersion des leitfähigen Polymers durch eine Lackschleuder auf das Substrat (Umdrehungsgeschwindigkeit 1.500 U/min) aufgebracht und dann das Lösemittel verdampft. Mit dieser Schleudertechnik sind aber nur kleine Flächen beschichtbar, weil nur diese unter vertretbaren Aufwand mit hohen Umdrehungsgeschwindigkeiten rotieren können.

Sol-Gel-Techniken sind insgesamt wesentlich kostengünstiger als Vakuumtechniken, haben jedoch ebenfalls eine Reihe von Nachteilen. So werden bei der Tauchtechnik immer Vorder- und Rückseite eines Substrats beschichtet, während die Aufschleudertechnik nur zur Beschichtung kleiner Flächen geeignet ist. Die Schichtdicke der Beschichtung ist bei Sol-Gel-Verfahren schwer kontrollierbar und die Auswahl der aufbringbaren Substanzen ist eingeschränkt. Ein weiterer Nachteil ist, dass die mit Sol-Gel-Verfahren verbundenen thermischen Trocknungsprozesse zur Formierung der elektrochromen Schichten häufig zu Rissbildung und Inhomogenitäten hinsichtlich der Dicke und der elektrooptischen Eigenschaften führen. Außerdem besitzen die so erzeugten Schichten oft eine schlechte Haftung und Wechselwirkung mit den transparenten Ansteuerelektroden. Dadurch wird das Schaltverhalten negativ beeinflusst. Die Schaltzeiten werden länger und es wird keine vollständige Aufhellung mehr erreicht.

Die Herstellung elektrochromer Schichten ist auch durch elektrochemische Abscheidung möglich, wie beispielsweise in den Patentschriften US4818352 und US5876581 beschrieben. Die Vorteile der elektrochemischen Abscheidungsverfahren sind, dass die Schichten kostengünstig herstellbar sind, die Dicke der abgeschiedenen Schicht durch die eingetragene elektrische Ladung definiert ist und gesteuert werden kann und eine große Anzahl von elektrochromen Substanzen für die Abscheidung zugänglich ist. So können sowohl Übergangsmetalloxide, wie Wolframtrioxid, anorganische Komplexverbindungen wie Eisenhexacyanoferrat oder organische Polymere, wie Po-ly-(3,4-ethylendioxy-thiophen) mit elektrochemischen Techniken hergestellt werden. Ein weiterer wichtiger Vorteil der elektrochemischen Beschichtungsverfahren im Vergleich zu den Vakuum- und Sol-Gel-Methoden, besteht darin, dass während der elektrochemischen Schichtbildung Mikroporen und Kanäle für den lonentransport gebildet werden, die das Schaltverhalten der so erzeugten Schichten günstig beeinflussen.

Diese Vorteile der elektrochemischen Abscheidung von elektrochromen Substanzen konnten bisher nicht genutzt werden, da sie auf großflächigen Substraten nach dem Stand der Technik nicht möglich ist. Elektrochemische Abscheidungen elektrochromer Substanzen erfolgten deshalb in der Praxis bisher nur auf relativ kleinflächigen Substraten. Es ist nicht bekannt, das elektrochrome Schichten auf Flächen größer als 0,16 m² elektrochemisch in tolerierbarer Homogenität abgeschieden werden konnten (US4818352). Ursache dafür ist der hohe Spannungsabfall der auf den transparenten leitfähigen Schichten erfolgt und der zu einer stark inhomogenen elektrochemischen Abscheidung führt.

Um größere Flächen elektrochemisch beschichten zu können, werden nach der Patentschrift US4818352 deshalb gut leitfähige Metallstreifen oder -drähte um die Peripherie und bei noch etwas größeren Flächen beispielsweise auch diagonal über die Fläche des beschichtenden Substrats angedrückt bzw. aufgeklebt. Nachteilig bei dieser Vorgehensweise ist insbesondere, dass in diesen Kontaktierungsbereichen selbst keine Abscheidung erfolgt und damit auch keine geschlossene homogene Schicht auf dem Substrat erhalten wird.

Ein weiterer Nachteil des aktuellen Stands der Technik ist, dass man häufig in einem elektrochromen Element nur eine elektrochrome Schicht (**3**) verwendet. Diese wird mit einer nicht elektrochromen lonenspeicherschicht (**5**) kombiniert, wie es beispielsweise in DE19908737 beschrieben wird. Der entscheidende Nachteil solcher Systeme ist der wesentlich geringere elektrochrome Färbungswirkungsgrad, verglichen mit Anordnungen die 2 elektrochrome Schichten verwenden. Dadurch werden sowohl die Geschwindigkeit der Abdunklung verlangsamt, als auch das Erreichen sehr tiefer Abdunklungen ausgeschlossen. Es können bei elektrochromen Elementen mit nur einer elektrochromen Schicht maximale Abdunklungen nur bis zu 15 % Lichtdurchlässigkeit erreicht werden. Die bisher vorgeschlagenen lonenspeicherschichten sind zwar nicht elektrochrom, weisen aber eine beträchtliche Lichtabsorption auf, so dass im gebleichten Zustand eine Lichtdurchlässigkeit von maximal 50% erreicht wird. Die Herstellung einer lonenspeicherschicht ist beispielsweise in DE19810931 beschrieben.

Die beiden mit elektrochromen Schichten versehenen Glasscheiben müssen mit einem Elektrolyten, der die zur Erhaltung der Elektroneuträlität bei den Oxidations- und Reduktionsreaktionen nötigen lonen enthält, verbunden werden (**4**). Nach dem Stand der Technik wurden verschiedene Elektrolyte für den Einsatz in elektrochromen Anordnungen vorgeschlagen, wie beispielsweise in EP996029, US5581394 und EP 1056097 beschrieben.

So kann im einfachsten Fall ein flüssiger Elektrolyt verwendet werden. Dieser flüssige Elektrolyt besteht aus einem polaren organischen Lösungsmittel bzw. einer Mischung mehrerer polarer Lösungsmittel und mindestens einem darin dissoziierten Leitsalz (z.B. WO96/18215).

Zu den entscheidenden Nachteilen flüssiger Medien gehören die mangelnde Stabilität der festen elektrochromen Schichten bei Schaltvorgängen in flüssigen Medien und die Gefahr des Auslaufens bei Zerstörung des Objekts. Deshalb stellt man durch Zugabe von Gelbildnem oder von in dem flüssigen Elektrolyten löslichen Polymeren Gelelektrolyte her. Die Verwendung von flüssigen oder gelartigen Elektrolyten führt bei der Herstellung großflächiger elektrochromer Elemente dazu, dass auf die Abdichtungen der Scheibe dauerhaft ein hoher hydrostatischer Druck ausgeübt wird. Diesem Druck kann die Abdichtung unter der auftretenden zusätzlichen Temperaturwechselbelastung nicht dauerhaft standhalten. Beim Einsatz elektrochromer Verglasungen in Fahrzeugen und Gebäuden kann im gefärbten Zustand bei starker Sonneneinstrahlung eine Temperatur von 80°C und höher erreicht werden. Außerdem führt der hydrostatische Druck einer flüssigen oder gelartigen Füllung zu einer Auswölbung ("Bauchen") großer Scheibenverbünde. Aus diesen Gründen sind in der Gebäudeverglasung nur feste Elektrolyte einsetzbar.

Die Verwendung von polymeren Festelektrolyten zwischen den beiden Scheiben des elektrochromen Systems führt zu einem elektrochromen Verbundglas. Unter Verbundglas versteht man einen Aufbau, bestehend aus einer Glasscheibe mit einer oder mehreren Scheiben aus Glas und/oder Verglasungsmaterial aus Kunststoff, die durch eine oder mehrere Zwischenschichten miteinander verbunden sind. Verbundgläser können prinzipiell mit zwei verschiedenen Verfahren, einem Gießharzverfahren und einem Folienverfahren hergestellt werden.

Bei der Gießharztechnik wird in einen vorher zwischen den beiden zu verbindenden Scheiben geschaffenen Zwischenraum eine Mischung, die auszupolymerisierende Monomere und gegebenenfalls weitere Zusätze enthält, eingefüllt. Die Polymerisation kann durch UV-Licht oder chemisch initiiert werden.

Wenn versucht wird, mittels der Gießharztechnologie ein ionenleitendes Polymer herzustellen, müssen der üblichen Monomerenmischung zusätzlich Weichmacher und Leitsalze zugemischt werden, wie das beispielsweise in DE19830993, DE19908737, US5859723 oder EP499115 beschrieben ist.

In der Patentschrift US5859723 wird konkret die Herstellung eines elektrochromen Verbundglases mit einem ionenleitenden polymeren Festelektrolyten auf Acrylatbasis durch ein solches Gießharzverfahren beschrieben. Dieses Gießharz besteht aus den Monomeren für den Kettenaufbau und deren Vernetzung, Weichmacher(n) und Leitsalze(en) sowie leicht oxidierbaren Zusätzen, die auch Bestandteil eines Leitsalzes sein können. Die durch Polymerisation dieses Gießharzes erhaltenen Polymere gehören zur Gruppe der Acrylate bzw. Methacrylate. Der Anteil von Weichmacher an der Gießharzmischung beträgt 5 bis 30%, bevorzugterweise 25%.

Polymere, die einem Scheibenverbund die Eigenschaften von Verbundsicherheitsglas geben sollen, müssen einerseits eine sehr gute Haftfestigkeit und Klebrigkeit besitzen, andererseits sind auch Elasitizität und Flexibilität des Polymers wichtig. Ersteres ist bei dem Polymer Polyvinylbutyral besonders ausgeprägt, zweiteres wird durch den richtig eingestellten Weichmachergehalt von etwa 20 bis 35% erreicht.

Das ionenleitende Gießharz nach US5859723 enthält kein Polyvinylbutyral und kann auch Weichmachergehalte unterhalb 20% aufweisen, so dass die damit hergestellten elektrochromen Elemente keine Verbundsicherheitsglaseigenschaften aufweisen.

Nachteilig beim Gießharzverfahren ist generell, dass die Polymerisation nicht vollständig verläuft und Restmonomere zurückbleiben. Diese Restmonomere können bei ionenleitenden Polymeren in elektrochromen Elementen zu unerwünschten elektrochemischen Nebenreaktionen bei der Schaltung der Elemente führen. Letztendlich wird damit die Langzeitstabilität eines solchen Systems stark eingeschränkt.

Die Folientechnologie nutzt eine thermoplastische, meist aus weichmacherhaltigen Polyvinylbutyral bestehende Folie, die unter erhöhten Druck und erhöhter Temperatur mit den zu verbindenden Glasscheiben zusammenlaminiert wird. Ein Verbundglas, welches mit einer weichmacherhaltigen Polyvinylbutyralfolie hergestellt wird, wird aufgrund seiner besonderen Eigenschaften auch als Verbundsicherheitsglas bezeichnet.

Eine ionenleitende Polyvinylbutyralfolie und ein elektrochromes Verbundglas, welches mit einer solchen Herstellungstechnologie gefertigt wird, sind bis heute nicht bekannt.

Auch andere Aufbauten schaltbarer Gläser sind bekannt, wie z.B. das in der Patentschrift US5838483 beschriebene photoelektrochrome Element. Dieses photoelektrochrome Element hat einen ähnlichen Aufbau wie in Figur 1 für das elektrochrome Element angegeben. Es weist auch 2 transparente Substrate und 2 transparente leitfähige Schichten sowie mindestens eine aber gegebenenfalls auch 2 komplementäre, elektrochrome Schichten sowie einen Polymerelektrolyten auf. Als ein mögliches Material für den Polymerelektrolyten wird auch Polyvinylbutyral (PVB) vorgeschlagen, allerdings nicht in der für ein Verbundsicherheitsglas nötigen Folienform. Im Unterschied zum erfindungsgemäß hergestellten elektrochromen Verbundglas hat das photoelektrochrome Element zusätzlich eine strahlungssensitive Elektrode und einen Redoxpromoter bzw. eine redoxaktive Komponente im Elektrolyte. Beide Komponenten sind für die Funktionsweise des photoelektrochromen Elementes essentiell, würden aber die Funktion des elektrochromen Verbundglases beeinträchtigen. Die schaltbaren Schichten werden gemäss US5838483 nicht elektrochemisch, sondern durch Sol-Gel-Verfahren hergestellt, deren Nachteile schon dargestellt wurden. Weiterhin ist nachteilig, dass das photoelektrochrome Element nach US5838483 nur bei Sonneneinstrahlung auf die strahlungssensitive Schicht gefärbt werden kann. Eine Nutzerkontrolle ist nur insofern möglich, dass bei Sonneneinstrahlung die Färbung verhindert bzw. die Färbungstiefe gesteuert werden kann. Eine Einfärbung ohne Sonneneinstrahlung ist bei dem photoelektrochromen Element nicht möglich. Das kann aber durchaus erwünscht sein, wenn das schaltbare Glas beispielsweise nachts als Sichtschutz eingesetzt werden soll. Mit einem elektrochromen Glas ist das ohne weiteres möglich. Der Einsatz von Redoxpromotern im Elektrolyten eines elektrochromen Elementes würde dazu führen, dass zur Aufrechterhaltung einer erfolgten Einfärbung ein ständiger Stromfluss nötig ist.

Der Stand der Technik lässt sich wie folgt zusammenfassen. Trotz ihres hohen Anwendungspotentials für die Gebäude- und Fahrzeugverglasung konnten elektrochrome Verglasungen bisher nicht den Sprung in in die breite praktische Anwendung schaffen. Das hat folgende Ursachen:
- Elektrochrome Schichten werden oft mit teuren Vakuumverfahren aufgebracht, die zudem die Zahl der nutzbaren elektrochromen Substanzen stark einschränken.
- Die großflächige elektrochemische Abscheidung elektrochromer Schichten wird bisher nicht beherrscht.
- Oft wird nur eine anstatt von 2 elektrochromen Schichten in einer elektrochromen Anordnung genutzt, was einen niedrigen Färbungswirkungsgrad zur Folge hat.
- Es werden keine hinreichend mechanisch stabilen Polymerelektrolyte, insbesondere nicht auf Polyvinylbutyralbasis verwendet, so dass das elektrochrome Element keine verbundsicherheitsglasanalogen Eigenschaften aufweist.
- Es wird eine Gießharztechnologie zur Herstellung des Polymerelektrolyten genutzt, wobei aufgrund der Anwesenheit des Weichmachers und der darin gelösten Salze sowie der zu verbindenden elektrochromen Schichten keine vollständige Polymerisation erfolgt.

Der Erfindung liegt die Aufgabe zugrunde, die genannten Mängel des Standes der Technik zu überwinden und ein neuartiges Verfahren zur Herstellung eines großformatigen elektrochromen Verbundglases anzugeben, welches durch die Verwendung kostengünstiger Beschichtungs- und Laminierungstechnologien, zweier komplementärer, elektrochromer Schichten und eines mechanisch stabilen, thermoplastisch verarbeitbaren Polymerelektrolyten auf Polyvinylbutyralbasis ein preiswertes, dauerhaft stabiles, großformatiges Verbundglas mit variabler Lichtdurchlässigkeit für den Markt zur Verfügung stellt.

Die Aufgabe wird erfindungsgemäß dadurch gelöst, dass zwei jeweils mit transparenten leitfähigen Materialien (**2** und **6**) beschichtete, großformatige Glasscheiben (**1** und **7**) elektrochemisch unter Verwendung einer segmentierten Gegenelektrode mit elektrochromen Filmen beschichtet werden (**3** und **5**), von denen einer bei anodischer Oxidation und der andere bei katodischer Reduktion gefärbt wird, und die mit einer mechanisch stabilen, gut haftenden, ionenleitenden Polyvinylbutyralfolie (**4**) durch Laminierung verbunden werden, wodurch Verbundsicherheitsglaseigenschaften erhalten werden.

Die elektrochemische Beschichtungstechnologien ermöglichen im Vergleich zu Vakuumtechnologien besonders kostengünstig die Substrate mit elektrochromen Filmen zu beschichten. Mit der elektrochemischen Technik ist außerdem eine wesentlich größere Vielfalt elektrochromer Materialien in dünnen Schichten herstellbar als mit den nach dem Stand der Technik überwiegend genutzten Vakuumverfahren. Dadurch wird auch der Einsatz leitfähiger Polymerer und anorganischer Komplexverbindungen möglich. Durch die Einbeziehung dieser Materialien werden verschiedene Farben für das elektrochrome System realisierbar.

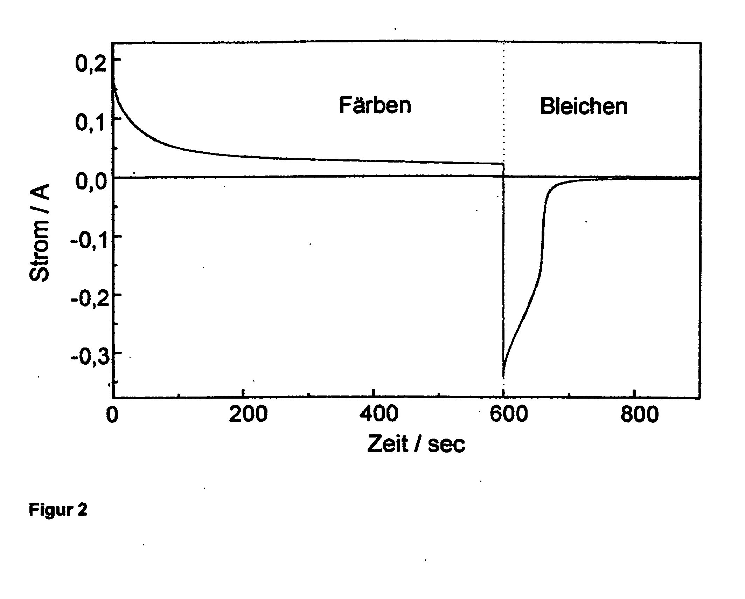

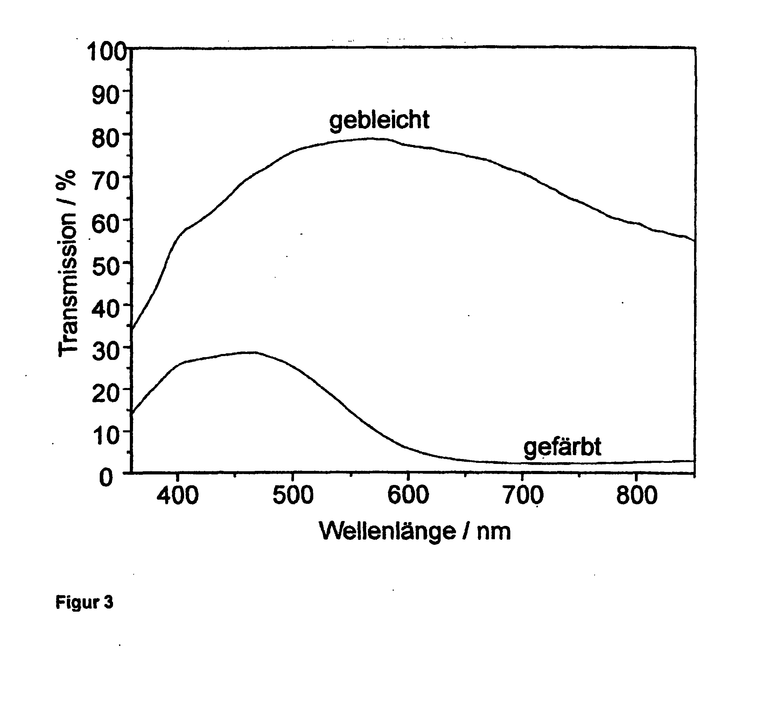

Die Verwendung einer zweiten elektrochromen Schicht anstelle einer lonenspeicherschicht führt zu einem höheren Färbungswirkungsgrad und damit zu schnelleren Schaltzeiten sowie der Möglichkeit einer tieferen Abdunklung. Außerdem ist eine höhere maximale Lichtdurchlässigkeit im entfärbten Zustand realisierbar. Diese Fakten sind anhand der Figuren 2 und 3, die im Ausführungsbeispiel 9 näher erläutert werden, ersichtlich. So beträgt bei einer Wellenlänge von 550 nm die maximale Lichtdurchlässigkeit der in diesem Ausführungsbeispiel beschriebenen Variante des erfindungsgemäßen elektrochromen Verbundglases 78 % und die minimale Lichtdurchlässigkeit 14%.

Durch die Verwendung einer optisch transparenten, mechanisch stabilen, thermoplastisch verarbeitbaren und ionenleitenden Folie aus weichmacherhaltigem Polyvinylbutyral wird es möglich, dass die zur Herstellung von Verbundsicherheitsglas üblichen Techniken und Vorrichtungen auch zur Herstellung von elektrochromen Scheibenverbünden verwendet werden können. Die ionenleitende Polyvinylbutyralfolie weist nicht nur die für die Elektrochromie nötige Ionenleitfähigkeit sondern auch die für ein Verbundsicherheitsglas notwendigen Eigenschaften, wie mechanische Stabilität, hohe Haftfestigkeit an Glas und hohe Reis- und Dehnfestigkeit, auf. Dadurch wird es möglich, Glasverbünde herzustellen, die die Eigenschaften der Änderung der Lichtdurchlässigkeit mit denen Splitterschutzes kombinieren. Weitere vorteilhafte Eigenschaften des weichmacherhaltigen Polyvinylbutyrals sind die gute Transparenz, Lichtbeständigkeit und Elastizität.

Überraschenderweise gelang es mit dem erfindungsgemäßen Verfahren auch großformatige Gläser elektrochemisch homogen mit elektrochromen Materialien zu beschichten. Ein Problem, dass die Herstellung großflächiger elektrochromer Scheiben durch elektrochemische Abscheidung bisher verhindert hat, ist die im Vergleich zu Metallen niedrigere elektrische Leitfähigkeit der transparenten Leitschichten.

Erfindungsgemäß erfolgt die elektrochemische Beschichtung großflächiger Substrate mit elektrochromen Schichten unter Nutzung einer segmentierten Gegenelektrode, wobei jedes Gegenelektrodensegment in Verbindung mit dem zu beschichtenden Substrat unabhängig elektrisch angesteuert werden kann. Bei Verwendung einer auf diese Weise segmentierten Gegenelektrode werden im wesentlichen von jedem E-lektrodensegment die diesem gegenüberliegenden Teile des großflächigen Substrats beschichtet, wobei eine gewisse Streuung in benachbarte Bereiche auftritt.

Das Ausmaß dieser Streuung hängt u.a. von der Leitfähigkeit des Elektrolyten und der verwendeten Stromdichte ab, und bestimmt damit den Abstand zwischen den einzelnen Gegenelektrodensegmenten. Da diese Streuung bei allen Gegenelektroden vorhanden ist, wird dadurch eine weitgehend homogene Stromdichteverteilung über das gesamte zu beschichtende Substrat gewährleistet. Diese homogene Stromdichteverteilung ist die Vorraussetzung für eine gute Homogenität der abgeschiedenen Schichten. Sie wurde erreicht, indem jedes dieser Gegenelektrodensegmente von einer eigenen Spannungsquelle angesteuert wird, wobei ein Pol dieser Spannungsquelle mit dem entsprechenden Gegenelektrodensegment und der andere Pol einer jeden Spannungsquelle mit dem zu beschichtenden Substrat verbunden wird. Auf diese Weise kann zwischen jedem Gegenelektrodensegment und dem Substrat eine eigene individuelle Spannung angelegt werden. Bei Realisierung einer homogenen Stromdichte über das Substrat steigt im allgemeinen die Spannung von der obersten Segmentelektrode ausgehend zur untersten Segmentelektrode hin an.

Es ist auch möglich, zur elektrochemischen Beschichtung großflächiger Substrate nur eine Gegenelektrode zu verwenden, die wesentlich schmaler ist als die zu beschichtende Scheibe und die während des Beschichtungsvorganges langsam an dem zu beschichtenden Substrat vorbeigezogen wird. Da die elektrochemische Abscheidung bei Verwendung einer solchen schmalen Gegenelektrode im wesentlichen nur in den dieser Gegenelektrode direkt gegenüberliegenden Bereichen erfolgt, kann durch das langsame Vorbeiziehen der Gegenelektrode über das Substrat eine einheitliche Schichtdickenverteilung der elektrochemisch abzuscheidenden elektrochromen Filme erreicht werden. Die Bewegung der Gegenelektrode kann beispielsweise mittels eines Schrittmotors realisiert werden. Die Geschwindigkeit der Bewegung dieser Elektrode ist in Kombination mit der Stromdichte entscheidend für die Dicke der elektrochromen Schichten.

Als Materialien der Gegenelektrode können Edelmetall- oder Edelmetalloxidbeschichtetes Titan, Kohle oder Graphit verwendet werden. Kohle und Graphit stellen ein preiswerte Elektrodenmaterialen dar, während sich Edelmetall- oder Edelmetalloxid-beschichtetes Titan durch eine besonders hohe Langzeitstabilität auszeichnen.

In einer erfindungsgemäßen Ausführung wird als katodisch elektrochrome Schicht in dem elektrochromen Verbundglas Wolframtrioxid verwendet. Wolframtrioxid wird bei katodischer Reduktion blau gefärbt und bei anodischer Oxidation entfärbt. Wolframtrioxid besitzt überraschenderweise auch in Verbindung mit dem ionenleitenden Polyvinylbutyral eine hohe Zyklen- und Langzeitstabilität.

Das katodisch elektrochrome Wolframtrioxid wird großflächig elektrochemisch durch katodische Reduktion aus Lösungen von Peroxowolframsäure abgeschieden. Die Peroxowolframsäure kann dabei in verschiedenen Lösungsmittel gelöst werden. Beispielsweise kann eine wässrige oder eine methanolische Peroxowolframsäurelösung verwendet werden. Aber auch eine Mischung von Wasser und Isopropanol beispielsweise im Verhältnis von 70 Volumen% Wasser und 30 Volumen% Isopropanol kommt in Frage. Die Herstellung der Peroxowolframsäure kann beispielsweise durch Auflösung von metallischem Wolfram, von Wolframtrioxid oder von Wolframsäure in Wasserstoffperoxid erfolgen.

In einer anderen Ausführung der Erfindung wird als katodisch elektrochrome Substanz Poly-(3,4-ethylendioxy-thiophen) oder Derivate des Poly-(3,4-ethylendioxy-thiophen) verwendet. Poly-(3,4-ethylendioxy-thiophen) wird bei katodischer Reduktion blau gefärbt und bei anodischer Oxidation weitgehend entfärbt. Poly-(3,4-ethylendioxy-thiophen) oder Derivate des Poly-(3,4-ethylendioxy-thiophen) werden großflächig elektrochemisch durch anodische Elektropolymerisation aus wässrigen Lösungen ihrer Monomere abgeschieden.

Erfindungsgemäß werden als anodisch elektrochrome Schicht Eisenhexacyanoferrat oder andere unlösliche Metallpolycyanometallate verwendet. Überraschenderweise erwies sich Eisenhexacyanoferrat bei Anwesenheit von lithiumionenhaltigem Polyvinylbutyral nicht nur für Kalium- sondern auch für Lithiumionen als interkalationsfähig und kann daher bei Anwesenheit von lithiumionenhaltigem Polyvinylbutyral geschaltet werden. Die blau gefärbte Form des Eisenhexacyanoferrat bezeichnet man auch als Preussisch Blau. Preussisch Blau kann durch Reduktion entfärbt werden.

Andere unlösliche Metallpolycyanometallate, die als anodisch elektrochrome Schicht in dem elektrochromen Verbundglas eingesetzt werden können, sind zum Beispiel Indiumhexacyanoferrat oder Nickelhexacyanoferrat. Die Kombination des blau einfärbenden Wolframtrioxids oder Poly-(3,4-ethylendioxy-thiophen)s mit unterschiedlichen verschieden einfärbenden Metallpolycyanometallaten bietet die Möglichkeit in unterschiedlichen Farbtönen abtönbare elektrochrome Verbundgläser herzustellen.

Eisenhexacyanoferrat oder andere unlösliche Metallpolycyanometallate werden grossflächig elektrochemisch abgeschieden.

Sowohl die Abscheidung der katodisch elektrochromen als auch der anodisch elektrochromen Schichten erfolgt auf transparenten leitfähigen Schichten. Überraschenderweise gelingt die elektrochemische Abscheidung von Wolframtrioxid und Preussisch Blau sowohl auf zinndotiertem Indiumoxid (ITO), Al-dotiertem Zinkoxid oder fluordotiertem Zinndioxid (FTO) ohne elektrochemische Zersetzung dieser transparenten leitfähigen Materialien auch aus saurer Peroxowolframsäurelösung und saurer Hexacyanoferratlösung bei Anwesenheit von Eisen(III).

Überraschenderweise gelang es auch, eine Polyvinylbutyralfolie herzustellen, die gute Ionenleitfähigkeit mit hoher mechanischer Stabilität und guter Haftfestigkeit vereint. Erfindungsgemäß wird die ionenleitende Polyvinylbutyralfolie aus dem Polymer Polyvinylbutyral und einem Weichmacher oder Weichmachergemisch, welches mindestens ein in Ionen dissoziiertes Lithium- oder Kaliumsalz enthält, durch Extrusion hergestellt.

Als Weichmacher oder Komponente eines Weichmachergemisches können organische Flüssigkeiten mit einer Dielektrizitätszahl größer 20 und einem Siedepunkt größer 150°C, vorzugsweise über 200°C, verwendet werden. Ein ausreichend hoher Siedepunkt ist nötig, um die Laminierung der entstehenden Folie bei erhöhter Temperatur durchführen zu können. Ein erhöhter Siedepunkt ist auch für die Langzeitstabilität und Temperaturbeständigkeit elektrochromer Elemente wichtig. Solche organischen Flüssigkeiten können beispielsweise Substanzen aus den Gruppen der Ketone, Alkylpyrrolidone, Polyethylenglykoldiether, Alkylencarbonate, Lactone, Dimethylalkylamide, Sulfolane oder aliphatische Nitrile oder Mischungen aus diesen Substanzklassen sein. Stoffe aus diesen Substanzklassen weisen erfahrungsgemäß eine ausreichend hohe Polarität auf, um geeignete Leitsalze aufzulösen und zur Dissoziation zu bringen. Als konkrete Weichmachersubstanzen aus diesen Stoffklassen können beispielsweise N-Methylpyrrolidon, Propylencarbonat, γ-Valerolacton oder γ-Butyrolacton verwendet werden.

Zusätzlich zu den oben genannten Weichmachersubstanzen können für die Weichmachermischung auch eine oder mehrere Substanzen aus der Gruppe der Ester von Dicarbonsäuren (z.B. von Phthalsäure, Sebazinsäure oder Adipinsäure), Estern der Phosphorsäure oder Estern von aliphatischen Diolen mit Carbonsäuren verwendet werden. Diese herkömmlichen bisher für nicht ionenleitende Polyvinylbutyralfolien verwendeten Weichmacher können in der Mischung mit den erfindungsgemäßen, stärker polaren Weichmachersubstanzen die mechanischen Eigenschaften der ionenleitenden Polyvinylbutyralfolie verbessern.

Erfindungsgemäß beträgt der Weichmacheranteil in der ionenleitenden Polyvinylbutyralfolie zwischen 15 und 35 Masse%. Bei tieferen Weichmachergehalten ist die lonenleitfähigkeit der Polyvinylbutyralfolie zu gering für eine sinnvolle praktische Anwendung, während bei höheren Weichmachergehalten keine mechanisch stabile Folie mehr erhalten wird. Tiefere Weichmachergehalte führen auch zu spröden, unelastischen Folien, die für Verbundsicherheitsglas nicht geeignet sind. Ein elektrochromes Verbundsicherheitsglas ist besonders vorteilhaft für den Einsatz in der Frontscheibe von Kraftfahrzeugen, da hier die Verwendung von Verbundsicherheitsglas zwingend vorgeschrieben ist.

Lithium- und Kaliumsalze sind für das in Ionen dissoziiert Leitsalz besonders gut geeignet sind, da sie eine hohe lonenbeweglichkeft aufweisen und aufgrund ihrer Größe auch sehr gut zum Ein- und Ausbau aus elektrochromen Filmen geeignet sind. Lithium- und Kaliumionen weisen nach den Protonen, die in Mischungen mit Polyvinylbutyral allerdings nicht verwendet werden können, die höchste lonenleitfähigkeit auf, so dass deren Verwendung erfindungsgemäß bevorzugt ist. Als Beispiele für einsetzbare Lithiumionensalze seinen genannt: LiClO₄, LiPF₆, LiSbF₆, LiAsF₆, Li(CF₃COO), LiBF₄, LiCF₃SO₃ oder LiN(SO₂CF₃)₂.

Die mechanisch stabile, ionenleitfähige Polyvinylbutyralfolie wird durch Extrusion hergestellt. Dadurch wird es möglich, die ionenleitenden Polyvinylbutyralfolien ohne Einsatz von Hilfslösungsmitteln mit hohen Durchsatz herzustellen. Es ist vorteilhaft, das Leitsalz im Weichmacher vor Durchführung der Extrusion aufzulösen. Damit ist eine besonders gute Verteilung der für die lonenleitfähigkeit sorgenden Ionen in der Polymerfolie möglich.

Die Herstellung der mechanisch stabilen, ionenleitenden Polyvinylbutyralfolie kann aber auch durch Einlegen einer kommerziell erhältlichen nicht ionenleitenden Folie in geeignete Weichmacher oder Weichmachergemische mit den darin gelösten Leitsalzen erfolgen. Bei diesem Verfahren erfolgt eine Eindiffusion der Weichmachersubstanzen mit den darin gelösten Leitsalzen in die bestehende nicht ionenleitende Polyvinylbutyralfolie, wodurch diese ionenleitend wird. Da die für dieses Verfahren geeigneten Weichmacher Polyvinylbutyrale auflösen können, wird der Vorgang der Eindiffusion bevorzugterweise bei Temperaturen durchgeführt, bei denen das Polyvinylbutyral nur wenig gelöst wird, der Weichmacher aber bereits in die Folie eindringen kann. Diese Temperaturen können sich für verschiedene Weichmacher stark unterscheiden.

Die Herstellung der mechanisch stabilen, ionenleitenden Polyvinylbutyralfolie kann auch in einem Gießverfahren erfolgen, wobei die Bestandteile der Folie in einem relativ leicht flüchtigen Lösungsmittel oder Lösungsmittelgemisch aufgelöst und auf eine Unterlage gegossen werden, wonach eine Entfernung des Lösungsmittels oder Lösungsmittelgemisches erfolgt. Dieser Vorgang kann solange wiederholt werden, bis eine Folie gewünschter Dicke erhalten wird. Dabei muß die vollständige Entfernung der leichtflüchtigen Komponente gesichert werden. Bevorzugte Lösungsmittel für diesen Zweck sind Alkohole wie zum Beispiel Methanol, Ethanol oder Isopropanol.

Erfindungsgemäß erfolgt die Herstellung des elektrochromen Verbundes durch Laminierung in Autoklaven bei erhöhten Drücken vorzugsweise zwischen 5 und 20 bar und bei erhöhten Temperaturen vorzugsweise zwischen 120 und 160°C. Es ist überraschend, dass sich unter diesen harten Bedingungen die Eigenschaften der elektrochromen Schichten nicht verschlechtern (Schaltverhalten, Homogenität).

In einer anderen erfindungsgemäßen Ausführung erfolgt die Herstellung des elektrochromen Verbundes durch Laminierung im Vakuumsack oder Vakuumring bei erhöhten Temperaturen vorzugsweise zwischen 120 und 160°C. Diese Technik wird wie auch die Autoklaventechnik zur Herstellung von konventionellem Verbundsicherheitsglas eingesetzt, ist aber aufgrund der einfacheren Anlagentechnik mit besonders geringen Investitionskosten verbunden.

Nach erfolgter Laminierung im Autoklaven, Vakuumsack oder Vakuumring ist das elektrochrome Verbundglas, welches unter Verwendung von Wolframtrioxid und Eisenhexacyanoferrat hergestellt wurde, blau gefärbt, wobei die Wolframtrioxidschicht ungefärbt und die Eisenhexacyanoferratschicht in der Form von Preussisch Blau vorliegt.

Zur endgültigen Formierung des erfindungsgemäß hergestellten elektrochromen Verbundglases für die praktische Anwendung muß daher eine Grundentfärbung erfolgen. Erfindungsgemäß erfolgt diese Grundentfärbung elektrochemisch, indem über längere Zeit eine Spannung, die 0,3 bis 1,5 V oberhalb der normalerweise zum Bleichen verwendeten Spannung liegt, an das elektrochrome Verbundglas angelegt und das Preussisch Blau dabei als Katode geschaltet wird. Auch nach erfolgter vollständiger Entfärbung, die in der Regel in Zeiten kleiner als 1 Stunde erreicht wird, ist es zweckmäßig, diese Spannung noch mehrere Stunden anliegen zu lassen, um im Polymerelektrolyten vorhandenen gelösten Sauerstoff zu beseitigen. Wenn der gelöste Sauerstoff nicht weitgehend entfernt wird, kann er bei einem elektrochromen

Verbundglas im ungefärbten Zustand durch Oxidation des Preussisch Blau zur unerwünschten Färbung und bei einem gefärbten elektrochromen Verbundglas durch Oxidation des Wolframtrioxid zu einer partiellen unerwünschten Selbstentfärbung führen.

Um das Eindringen von Luftsauerstoff in das elektrochrome Verbundglas hinein und von Weichmacherkomponenten aus dem Verbundglas heraus zu verhindern, ist eine Abdichtung des elektrochromen Verbundglases notwendig. Erfindungsgemäß wird diese Abdichtung durch Einsatz von Epoxidharz und Butylsulfid erreicht. Zuerst erfolgt eine Rundumabdichtung mit Epoxidharz, wodurch das Eindringen von Sauerstoff verhindert wird. Das Epoxidharz ist allerdings noch weichmacherdurchlässig. Auf die erste Abdichtungsschicht aus Epoxidharz wird daher Butylsulfid aufgebracht, welches das Entweichen des Weichmachers verhindert und ein Eindringen von Luftfeuchtigkeit unmöglich macht. Die Komplettierung dieser Abdichtung kann beispielsweise durch Aufkleben einer mit einem nicht leitfähigen Kleber beschichteten Aluminiumfolie erfolgen, die ebenfalls als Gas- und Feuchtigkeitsbarriere dient.

Die Kontaktierung der transparenten leitfähigen Elektroden erfolgt an den überstehenden Randseiten (**8** und **9**). Um eine gleichmäßige Einfärbung zu sichern, ist auch homogene Kontaktierung über die gesamte überstehende Randseite nötig. Dazu wird vorteilhafterweise ein gut leitfähiges Metall auf diese transparente leitfähige Schicht aufgebracht. Vorzugsweise kann ein Kupferleitband aufgeklebt werden.

### Ausführungsbeispiele

### 1. Ausführungsbeispiel: elektrochemische Herstellung eines Wolframtrioxidfilms mit segmentierter Gegenelektrode

Auf eine mit einer Fluor-dotierten Zinndioxidschicht (FTO-Schicht) beschichteten 4 mm dicken Glastafel (K-Glas, Pilkington) der Größe 30 x 50 cm² erfolgte die galvanostatische elektrochemische Abscheidung eines Wolframtrioxidfilms. Der Flächenwiderstand der FTO-Schicht betrug 17 Ω/sq. Die Abscheidung erfolgte aus einer 0,05 molaren wässrigen Peroxowolframsäurelösung. Diese Lösung wurde durch Auflösen der entsprechenden Menge Wolfram in einer überschüssigen Menge Wasserstoffperoxid hergestellt. Bei der Herstellung nicht verbrauchtes Wasserstoffperoxid wurde durch Eintauchen einer platinierten Titanelektrode in die Lösung katalytisch zersetzt. Die Leitfähigkeit des Elektrolyten betrug etwa 6 mS/cm.

Die elektrochemische Beschichtung erfolgte in einem Behälter mit den Maßen:

Höhe x Breite x Tiefe = 30 cm x 55 cm x 4 cm. Die zu beschichtende Glasscheibe wurde so in dem Behälter befestigt, dass ein 1 cm breiter Streifen aus der Lösung herausragte. Auf diesen Streifen wurde zur Kontaktierung über die volle Breite von 50 cm ein Kupferleitband (Band 1181, Firma 3M) geklebt. Parallel zu der zu beschichtenden Glasscheibe wurde im Abstand von 3 cm eine PVC-Platte, auf der 6 Gegenelektrodensegmente befestigt wurden, in die Elektrolytlösung eingebracht.

Jede der 6 Gegenelektrodensegmente war 50 cm lang entsprechend der Breite der zu beschichtenden Glasplatte und 4 cm breit. Der Abstand zwischen den einzelnen Streifen betrug jeweils 0,7 cm. Die Elektrodenstreifen bestanden aus 1 mm dicken mit Rutheniumoxid beschichtetem Titan.

Am oberen Teil der zu beschichtenden Glasplatte wurde ein 1 mm-dicker beidseitig platinierter Titanstreifen mit einer Länge von 50 cm und mit einer Breite von 4 cm befestigt und etwa 0,5 cm tief in die Elektrolytlösung eingetaucht. Dieser Streifen diente als Hilfselektrode.

Zur elektrolytischen Wolframtrioxidabscheidung wurden 6 Gleichrichter des Typs PS-2403D (Fa. Conrad) eingesetzt. Die Minuspole aller 6 Gleichrichter wurden mit der zu beschichtenden Glasplatte und der Hilfselektrode verbunden, während jeder Pluspol der 6 verschiedenen Gleichrichter mit einer anderen der 6 einzelnen Gegenelektrodensegmente verbunden wurde. Durch die Einstellung des gleichen Stromes von jeweils 80 mA an jedes Gegenelektrodensegment erfolgte an jedem Gleichrichter eine sich selbstregulierende Einstellung der notwendigen Spannung. Die Gesamtstromstärke der Abscheidung betrug 480 mA. Unter diesen Bedingungen erfolgte eine 10-minütige katodische Abscheidung der Wolframtrioxidschicht aus der Wolframperoxosäurelösung. Es wurde dabei eine Wolframtrioxidschicht mit großer Homogenität der Schichtdicke von 180 nm erhalten. Abweichungen in der optischen Homogenität betrugen weniger als 5 %.

### 2. Ausführungsbeispiel: elektrochemische Herstellung eines Preussisch Blau-Films mit segmentierter Gegenelektrode

Auf eine mit einer Fluor-dotierten Zinndioxidschicht beschichteten 4 mm dicken Glasplatte (K-Glas, Pilkington) der Größe 80 x 120 cm² erfolgte die galvanostatische elektrochemische Abscheidung eines Preussisch-Blau-Films. Der Flächenwiderstand der FTO-Schicht betrug 17 Ω/sq. Die Abscheidung erfolgte aus einer wässrigen Lösung, die 0,025 mol/l Kaliumhydrogensulfat, 0,005 mol/l Eisen(III)-sulfat und 0,005 mol/l Kaliumhexacyanoferrat(III) enthielt. Die Leitfähigkeit dieser Lösung betrug etwa 12 mS/cm.

Die elektrochemische Beschichtung erfolgte in einem Behälter mit den Maßen:

Höhe x Breite x Tiefe = 100 cm x 130 cm x 5 cm. Die zu beschichtende Glasscheibe wurde so in dem Behälter befestigt, dass ein 1 cm breiter Streifen aus der Lösung herausragte. Auf diesen Streifen wurde zur Kontaktierung auf der vollen Breite von 120 cm ein Kupferleitband (Band 1181, Firma 3M) geklebt. Parallel zu der zu beschichtenden Glasscheibe wurde im Abstand von 3 cm eine Plexiglas-Platte, auf der 17 Gegenelektrodensegmente befestigt wurden, in die Elektrolytlösung eingebracht. Jede der 17 Gegenelektrodensegmente war 120 cm lang entsprechend der Breite der zu beschichtenden Glasplatte und 4 cm breit. Der Abstand zwischen den einzelnen Streifen betrug jeweils 0,7 cm. Die Elektrodenstreifen bestanden aus 1 mm dicken mit Iridiumoxid beschichtetem Titan.

Am oberen Teil der zu beschichtenden Glasplatte wurde ein 1 mm-dicker beidseitig platinierter Titanstreifen mit einer Länge von 120 cm und mit einer Breite von 4 cm befestigt und etwa 2,5 cm tief in die Elektrolytlösung eingetaucht. Dieser Streifen diente als Hilfselektrode.

Zur elektrolytischen Preussisch-Blau-Abscheidung wurden 17 Gleichrichter eingesetzt, deren Minuspole wiederum alle mit der zu beschichtenden Glasplatte und der Hilfselektrode verbunden wurden, während jeder Pluspol der 17 verschiedenen Gleichrichter mit einer anderen der 17 einzelnen Gegenelektroden verbunden wurde.

An jedem der 17 Gleichrichter wurde eine Stromstärke von 10 mA eingestellt, so dass die Gesamtstromstärke der Abscheidung 170 mA betrug. Die Einstellung der erforderlichen Spannung erfolgte unter den Konstantstrombedingungen bei jedem Gleichrichter selbstregulierend. Nach einer katodischen Abscheidung über 20 Minuten wurde eine Preussisch-Blau-Schicht mit großer Homogenität der Schichtdicke von 110 nm erhalten. Abweichungen in der optischen Homogenität betrugen weniger als 5 %.

### 3. Ausführungsbeispiel: elektrochemische Herstellung eines Wolframtrioxidfilms mit beweglicher, schmaler Gegenelektrode

Auf eine mit einer Fluor-dotierten Zinndioxidschicht beschichteten 4 mm dicken Glasplatte (K-Glas, Pilkington) der Größe 30 x 50 cm² erfolgte die Abscheidung eines Wolframtrioxidfilms. Die Abscheidung erfolgte aus einer 0,05 molaren wässrigen Peroxowolframsäurelösung.

Die elektrochemische Beschichtung erfolgte in einem Behälter mit den Maßen:

Höhe x Breite x Tiefe = 30 cm x 55 cm x 4 cm. Die zu beschichtende Glasscheibe wurde so in dem Behälter befestigt, dass ein 1 cm breiter Streifen aus der Lösung herausragte. Auf diesen Streifen wurde zur Kontaktierung über die volle Breite von 50 cm ein Kupferleitband (Band 1181, Firma 3M) geklebt. Parallel zu der zu beschichtenden Glasplatte wurde eine bewegliche Gegenelektrode am Boden des Gefäßes positioniert. Diese Gegenelektrode war 50 cm lang entsprechend der Breite der zu beschichtenden Glasplatte und 4 cm breit. Sie bestand aus platiniertem Titan mit einer Dicke von 2 mm. Sie war mittig an einem Titanstreifen (2 mm dick) mit einer Länge von 30 cm und einer Breite von 5 mm befestigt. Dieser Titanstreifen diente sowohl zur Kontaktierung als auch zur Bewegung der Elektrode.

Während der galvanostatischen elektrochemischen Abscheidung der Wolframtrioxidschicht wurde die Gegenelektrode mit einer Geschwindigkeit von 0,56 cm pro Minute an dem zu beschichtenden Substrat vorbeigezogen. Insgesamt wurde die Gegenelektrode 3 mal an dem gesamten Substrat vorbeigezogen. Die Beschichtungsdauer betrug 132 Minuten. Zwischen Gegenelektrode und zu beschichtendem Substrat floß während der gesamten Beschichtungsdauer ein Strom von 80 mA.

### 4. Ausführungsbeispiel: Herstellung einer ionenleitenden Polyvinylbutyralfolie im Gießverfahren

84 g Polyvinylbutyral (Fa. Aldrich) mit einer Molmasse von 170000-250000 g/mol wurde unter Rühren in 1,6 l Isopropanol gelöst. Zu dieser Mischung werden 73,5 g einer 1 molaren Lösung von Lithiumperchlorat in γ-Butyrolacton gegeben.

Von dieser Mischung wurde jeweils der sechste Teil auf eine Glasunterlage der Größe 30 cm x 50 cm gegossen. Nach dem Gießen der Lage wurde das Isopropanol innerhalb eines Tages verdunstet. Dieser Prozess wurde fünfmal wiederholt. Am Ende wurde eine optisch transparente, mechanisch stabile, ionenleitende Polyvinylbutyralfolie der Dicke 0,7 mm erhalten.

### 5. Ausführungsbeispiel: Herstellung einer ionenleitenden Polyvinylbutyralfolie durch Extrudieren

Die Extrusion erfolgte an einem Doppelschneckenlaborextruder der Firma Haake. Polyvinylbutyralpulver Pioloform BS18 (Firma Wacker) und eine 1 molare Lösung von Lithiumperchlorat in γ-Butyrolacton als Weichmacher wurden im Massenverhältnis von 65 Masse% Polyvinylbutyral und 35 Masse% Weichmacher bei Temperaturen von 160 bis 180°C im Bereich der Doppelschnecke zu einer 10 cm breiten ionenleitenden Folie mit einer Dicke von 0,5 mm extrudiert.

### 6. Ausführungsbeispiel: Herstellung einer ionenleitenden Polyvinylbutyralfolie durch Einlegen einer herkömmlichen Folie in ein Weichmachergemisch

Eine weichmacherhaltige, nicht ionenleitende Polyvinylbutyralfolie Trosifol MB-FR (HT Troplast) mit einer Dicke von 0,76 mm wurde 2 Tage bei einer Temperatur von +5°C in eine 1 molare Lösung von Lithiumperchlorat in γ-Butyrolacton eingelegt.

Nach Herausnehmen dieser Folie und Entfernen der anhaftenden Reste von γ-Butyrolacton wurde eine ionenleitende Polyvinylbutyralfolie erhalten.

### 7. Ausführungsbeispiel: Herstellung eines elektrochromen Verbundglases durch Laminieren im Vakuumsack

Zwei elektrochemisch mit Wolframtrioxid beziehungsweise mit Preussisch Blau beschichtete K-Glasscheiben der Maße 30 cm x 50 cm wurden mit einer ionenleitenden Polyvinylbutyralfolie zusammengelegt. Diese Polyvinylbutyralfolie wurde wie im Ausführungsbeispiel 6 beschrieben, jedoch unter Verwendung einer weichmacherhaltigen, nicht ionenleitenden Polyvinylbutyralfolie des Typs Trosifol MV-HR (HT Troplast), hergestellt.

Das Ensemble wurde in einem Vakuumsack (Airtech International) positioniert. Nach Anlegen eines Vakuums kleiner 50 mbar wurde der Vakuumsack mit dem zu laminierenden Ensemble auf eine Ceranheizplatte der Fläche 58 cm x 43 cm (Fa. Gestigkeit) gelegt. Innerhalb von 2 Stunden wurde die Temperatur auf 135 °C gesteigert und dort 1 Stunde gehalten. Danach erfolgte über 3 Stunden die Abkühlung auf unterhalb 40°C und daraufhin die Entnahme des elektrochromen Verbundglases.

### 8. Ausführungsbeispiel: Herstellung eines elektrochromen Verbundglases durch Laminieren im Autoklaven

Zwei elektrochemisch mit Wolframtrioxid beziehungsweise mit Preussisch Blau beschichtete K-Glasscheiben mit den Maßen 4 cm x 6 cm wurden mit einer im Gießfolienverfahren nach Ausführungsbeispiel 4 hergestellten ionenleitenden Polyvinylbutyralfolie verbunden.

Zu diesem Zweck wurden die beschichteten Glascheiben und die ionenleitende Polyvinylbutyralfolie zusammengelegt und in einen Laborautoklaven eingebracht. Dieser wurde druckdicht verschlossen. Nach Evakuieren auf 7 mbar wurde mit Argon ein Druck von 12 bar hergestellt. Daraufhin wurde der Autoklav auf 140 °C erwärmt. Diese Temperatur wurde 15 Minuten lang gehalten. Nach erfolgter Abkühlung und Druckentlastung konnte ein elektrochromes Verbundglasmuster entnommen werden.

### 9. Ausführungsbeispiel: Abdichtung, Grundentfärbung und Schaltung eines elektrochromen Verbundglases nach der Laminierung

Ein elektrochromes Verbundglas mit den Maßen 30 cm x 50 cm erhielt nach erfolgter Laminierung einen ersten Abdichtungsstreifen aus dem Epoxidharz Araldit 2010 (Fa. Ciba). Nach Aushärtung dieses Epoxidharzes wurde das elektrochrome Verbundglas mit einem Streifen Butylband Delta B15 (Firma Dörken) und danach noch mit einer rückseitig mit nicht leitfähigem Kleber beschichteten Aluminiumfolie (Alujet) am Rand umklebt. Anschließend wurde zur besseren Kontaktierung ein mit leitfähigem Kleber beschichtetes Kupferband (Band 1181, Firma 3M) auf den beiden überstehenden Randstreifen der transparenten leitfähigen Schicht aufgeklebt.

Danach erfolgte die Grundentfärbung dieses elektrochromen Verbundglases durch Anlegen einer Gleichspannung von 2,8 V, wobei das Wolframtrioxid an den Pluspol und das Preussisch Blau an den Minuspol angeklemmt wurden. Nach etwa 20 Minuten ist das elektrochrome Verbundglas vollständig entfärbt. Zur Entfernung des im ionenleitenden Polyvinylbutyral gelösten Sauerstoff bleibt die Spannung von 2,8 V weitere 6 Stunden an das Element angelegt. Danach ist das elektrochrome Verbundglas einsetzbar.

Es wurde mit 1,4 V (Wolframoxid Minuspol) gefärbt und 1,8 V (Wolframoxid Pluspol) entfärbt. Der Strom-Zeit-Verlauf ist für einen Schaltzyklus in Figur 2 dargestellt. Pro Färbe- oder Entfärbeschritt floss jeweils eine elektrische Ladungsmenge von 16 As.

Das entspricht einer Ladungskapazität von etwa 11 mAs/cm². Die elektrische Energie für eine vollständige Umfärbung beträgt bei der Färbung ca. 160 Ws/m² und bei der Entfärbung etwa 200 Ws/m². Die Transmissionsspektren für die gefärbte und ungefärbte Form des elektrochromen Verbundglases zeigt Figur 3. Die Lichtdurchlässigkeit im sichtbaren Spektralbereich zwischen 380 und 780 nm beträgt im ungefärbten Zustand 70 % und im gefärbten Zustand 13 %. Bei 550 nm betrug die Lichtdurchlässigkeit im gefärbten Zustand 14% und im ungefärbten Zustand 78%.

### 10. Ausführungsbeispiel: Belastungstest eines elektrochromen Verbundglases

Das nach Ausführungsbeispiel 9 hergestellte elektrochrome Verbundglas wurde einem Dauerschalttest unterworfen. Dazu wurde es mit 1,4 V gefärbt und unter Polaritätsumkehr bei 1,8 V entfärbt. Die Färbung dauerte jeweils 2 Minuten und die Entfärbung 1 Minute. Insgesamt wurden 20.000 Färbe-/Entfärbezyklen durchgeführt, ohne das signifikante Änderungen in der Lichtdurchlässigkeit sowie im Schaltverhalten (Geschwindigkeit, Bereich der Transmissionsänderung) des elektrochromen Verbundglases auftraten.

## Patentansprüche

1. Verfahren zur Herstellung eines großformatigen elektrochromen Verbundglases, **dadurch gekennzeichnet, dass** zwei jeweils mit einer transparenten leitfähigen Schicht (**2** und **6**) beschichtete Glasscheiben (**1** und **7**)
- elektrochemisch unter Verwendung einer segmentierten Gegenelektrode mit elektrochromen Filmen (**3** und **5**) beschichtet werden, von denen einer bei anodischer Oxidation und der andere bei katodischer Reduktion gefärbt wird
- und danach mit einer mechanisch stabilen, gut haftenden, ionenleitenden Polyvinylbutyralfolie (**4**) durch Laminierung zum Verbundsicherheitsglas verbunden werden.

2. Verfahren zur Herstellung eines großformatigen elektrochromen Verbundglases nach Anspruch 1, **dadurch gekennzeichnet, dass** bei der elektrochemischen Beschichtung jedes Gegenelektrodensegment in Verbindung mit dem zu beschichtenden Substrat unabhängig elektrisch angesteuert werden kann.

3. Verfahren zur Herstellung eines großformatigen elektrochromen Verbundglases nach Anspruch 1, **dadurch gekennzeichnet, dass** als katodisch elektrochrome Schicht Wolframtrioxid verwendet wird, welches elektrochemisch durch katodische Reduktion aus Lösungen von Peroxowolframsäure abgeschieden wird.

4. Verfahren zur Herstellung eines großformatigen elektrochromen Verbundglases nach Anspruch 1, **dadurch gekennzeichnet, dass** als katodisch elektrochrome Substanz Poly-(3,4-ethylendioxy-thiophen) oder dessen Derivate verwendet werden.

5. Verfahren zur Herstellung eines großformatigen elektrochromen Verbundglases nach Anspruch 1, **dadurch gekennzeichnet, dass** als anodisch elektrochrome Schicht Eisenhexacyanoferrat oder andere unlösliche Metallpolycyanometallate verwendet werden.

6. Verfahren zur Herstellung eines großformatigen elektrochromen Verbundglases nach Anspruch 1, **dadurch gekennzeichnet, dass** die ionenleitende Polyvinylbutyralfolie (**4**) aus dem Polymer Polyvinylbutyral und einem Weichmacher oder Weichmachergemisch, welches mindestens ein in Ionen dissoziiertes Kalium- oder Lithiumsalz enthält, durch Extrusion hergestellt wird, wobei der Weichmacheranteil in der ionenleitenden Polyvinylbutyralfolie zwischen 15 und 35 Masse% liegt.

7. Verfahren zur Herstellung eines großformatigen elektrochromen Verbundglases nach Anspruch 1, **dadurch gekennzeichnet, dass** die Herstellung des Verbundes durch Laminierung im Autoklaven bei erhöhten Drücken vorzugsweise zwischen 5 und 20 bar und bei erhöhten Temperaturen vorzugsweise zwischen 120 und 160°C erfolgt.

8. Verfahren zur Herstellung eines großformatigen elektrochromen Verbundglases nach Anspruch 1, **dadurch gekennzeichnet, dass** die Herstellung des Verbundes durch Laminierung im Vakuumsack oder Vakuumring bei erhöhten Temperaturen vorzugsweise zwischen 120 und 160°C erfolgt.

9. Verfahren zur Herstellung eines großformatigen elektrochromen Verbundglases nach Anspruch 1, **dadurch gekennzeichnet, dass** nach der Laminierung eine elektrochemische Grundentfärbung durchgeführt wird, wozu über längere Zeit eine Spannung, deren Betrag 0,3 bis 1,5 V oberhalb der im Schaltbetrieb zum Bleichen verwendeten Spannung liegt, an das elektrochrome Verbundglas angelegt wird.

10. Verfahren zur Herstellung eines großformatigen elektrochromen Verbundglases nach Anspruch 1, **dadurch gekennzeichnet, dass** die Randabdichtung durch eine Kombination von Epoxidharz und Butylsulfid durchgeführt wird.

## Claims

1. Process for the production of a large area laminated electrochromic glass **characterised in that** two glass panes (**1** and **7**) respectively coated with a transparent conductive layers (**2** and **6**)
- are coated electrochemically with electrochromic films (**3** and **5**), using a segmented counter-electrode, one of the films being colored during anodic oxidation and the other during cathodic reduction,
- and subsequently combined, by laminating, with a mechanically stable, highly adhesive, ion-conductive polyvinyl butyral film (**4**) to form laminated safety glass.

2. Process for the production of a large area laminated electrochromic glass according to claim 1 **characterised in that**, during electrochemical coating, each counter-electrode segment can be independently electrically targeted in association with the substrate to be coated.

3. Process for the production of a large area laminated electrochromic glass according to claim 1 **characterised in that** tungsten trioxide is used as cathodic electrochromic layer which is deposited electrochemically by cathodic reduction from solutions of peroxotungstic acid.

4. Process for the production of a large area laminated electrochromic glass according to claim 1 **characterised in that** poly-(3,4-ethylene dioxythiophene) or its derivatives are used as cathodic electrochromic substance.

5. Process for the production of a large area laminated electrochromic glass according to claim 1 **characterised in that** iron hexacyanoferrate or another insoluble metal polycyanometalate is used as anodic electrochromic layer.

6. Process for the production of a large area laminated electrochromic glass according to claim 1 **characterised in that** the ion-conductive polyvinyl butyral film (**4**) is produced by extrusion from the polymer polyvinyl butyral and a plasticizer or plasticizer mixture which contains at least one ion dissociated potassium or lithium salt, the proportion of plasticizer in the ion-conductive polyvinyl butyral film being between 15 and 35 % by mass.

7. Process for the production of a large area laminated electrochromic glass according to claim 1 **characterised in that** the production of the composite takes place by lamination in an autoclave at elevated pressures of preferably between 5 and 20 bar and at elevated temperatures of preferably between 120 and 160 °C.

8. Process for the production of a large area laminated electrochromic glass according to claim 1 **characterised in that** the production of the composite takes place by lamination in the vacuum bag or the vacuum ring at elevated temperatures of preferably between 120 and 160 °C.

9. Process for the production of a large area laminated electrochromic glass according to claim 1 **characterised in that**, following lamination, an electrochemical basic discolouration is effected for which purpose a voltage, the amount of which is 0.3 to 1.5 V above the voltage used for bleaching during switching operation, is applied to the electrochromic composite glass.

10. Process for the production of a large area laminated electrochromic glass according to claim 1 **characterised in that** the edge seal is effected by a combination of epoxy resin and butyl sulphide.

## Revendications

1. Procédé pour la fabrication d'un verre de sécurité feuilleté électrochrome de grand format, **caractérisé en ce que** deux vitres en verre (**1** et **7**) revêtues chacune d'une couche transparente conductrice (**2** et **6**)
- sont revêtues de films électrochromes (**3** et **5**) par un procédé électrochimique à l'aide d'une contre-électrode segmentée, l'une de ces couches étant colorée par oxydation anodique et l'autre par réduction cathodique
- et sont ensuite reliées par laminage par le biais d'un film en polybutyral de vinyle (**4**) conducteur d'ions, mécaniquement stable et bien adhésif, de sorte à former d'un verre de sécurité feuilleté.

2. Procédé pour la fabrication d'un verre de sécurité feuilleté électrochrome de grand format selon la revendication 1, **caractérisé en ce que**, lors du revêtement électrochimique, chaque segment de contre-électrode peut être excité électriquement de manière indépendante en relation avec le substrat à revêtir.

3. Procédé pour la fabrication d'un verre de sécurité feuilleté électrochrome de grand format selon la revendication 1, **caractérisé en ce que** du trioxyde de tungstène, déposé par un procédé électrochimique de réduction cathodique de solutions d'acide peroxotungstique, est utilisé pour la couche électrochrome cathodique.

4. Procédé pour la fabrication d'un verre de sécurité feuilleté électrochrome de grand format selon la revendication 1, **caractérisé en ce que** du Poly-(3,4-dioxyde d'éthylène-thiophène) ou ses dérivés sont utilisés comme substance électrochrome cathodique.

5. Procédé pour la fabrication d'un verre de sécurité feuilleté électrochrome de grand format selon la revendication 1, **caractérisé en ce que** de l'hexacyanoferrate de fer ou d'autres polycyanométallates métalliques non solubles sont utilisés pour la couche électrochrome anodique.

6. Procédé pour la fabrication d'un verre de sécurité feuilleté électrochrome de grand format selon la revendication 1, **caractérisé en ce que** le film en polybutyral de vinyle (**4**) conducteur d'ions est réalisé par extrusion à partir du polymère polybutyral de vinyle et d'un plastifiant ou d'un mélange de plastifiants contenant au moins un sel de potassium ou de lithium dissocié en ions, la proportion de plastifiant dans le film en polybutyral de vinyle conducteur d'ions se situant entre 15 et 35 % en masse.

7. Procédé pour la fabrication d'un verre de sécurité feuilleté électrochrome de grand format selon la revendication 1, **caractérisé en ce que** la liaison est réalisée par laminage en autoclave sous des pressions élevées, de préférence entre 15 et 20 bars, et à des températures élevées, de préférence entre 120 et 160 °C.

8. Procédé pour la fabrication d'un verre de sécurité feuilleté électrochrome de grand format selon la revendication 1, **caractérisé en ce que** la liaison est réalisée par laminage en sac sous vide ou en anneau sous vide à des températures élevées, de préférence entre 120 et 160 °C.

9. Procédé pour la fabrication d'un verre de sécurité feuilleté électrochrome de grand format selon la revendication 1, **caractérisé en ce que**, après le laminage, une décoloration électrochimique de fond est réalisée en appliquant, sur une période prolongée, une tension au verre de sécurité feuilleté électrochrome dont la valeur se situe 0,3 à 1,5 V au-dessus de la tension utilisée en service pour le blanchiment.

10. Procédé pour la fabrication d'un verre de sécurité feuilleté électrochrome de grand format selon la revendication 1, **caractérisé en ce que** l'étanchéité des bords est obtenue à l'aide d'une combinaison de résine époxy et de sulfure de butyle.
